# EUROPÄISCHE PATENTANMELDUNG

(11) **EP 2 813 454 A1**
(43) Veröffentlichungstag der Anmeldung: **17.12.2014**
(21) Anmeldenummer: 14001625.4
(22) Anmeldetag: 08.05.2014
(51) Int. Cl.: B65H 59/40, G01D 18/00

(54) **Nullpunktabgleich eines Fadenzugkraftsensors**

(30) Priorität: 06.06.2013 DE 102013009452
(71) Anmelder: Saurer Germany GmbH & Co. KG, 42897 Remscheid (DE)
(72) Erfinder: Hennig, Peter, 52525 Heinsberg (DE); Iding, Michael, 41063 Mönchengladbach (DE); Kohlen, Helmut, 50181 Bedburg (DE); Paschen, Ansgar, 52078 Aachen (DE); RUH, Wolf-Michael, 41844 Wegberg-Watern (DE); Wedershoven, Hans-Günter, 41334 Nettetal (DE)
(74) Vertreter: Hamann, Arndt

(57) **Zusammenfassung**

Die Erfindung betrifft ein Verfahren zum Nullpunktabgleich eines Fadenzugkraftsensors (20). Die zeitveränderliche Drift (F₀) des Fadenzugkraftsensors (20) wird in Abhängigkeit von einer ersten Variablen (t₁), die eine Betriebszeit des Fadenzugkraftsensors (20) repräsentiert, ermittelt. Der zeitveränderliche Verlauf (49) der Drift des Fadenzugkraftsensors (20) wird in Abhängigkeit von der ersten Variablen (t₁) gespeichert. Während der Beaufschlagung des Fadenzugkraftsensors (20) mit einem Faden (30) wird mittels des gespeicherten Verlaufes ein Nullpunktabgleich durchgeführt.

## Beschreibung

Die vorliegende Erfindung betrifft ein Verfahren zum Nullpunktabgleich eines Fadenzugkraftsensors und eine Textilmaschine mit einem Fadenzugkraftsensor.

Fadenzugkraftsensoren werden in Textilmaschinen eingesetzt, bei denen es auf die Einhaltung einer vorgegebenen Fadenspannung ankommt. Das kann zum Beispiel in Spulmaschinen, Zwirnmaschinen oder Strickmaschinen der Fall sein.

Die DE 10 2005 045 789 A1 offenbart die Arbeitsstelle einer Spulmaschine mit einem Fadenzugkraftsensor zum Überwachen der Fadenzugkraft eines von einer Vorlagespule ablaufenden Fadens sowie einen Fadenspanner zum Regulieren der Fadenzugkraft. Die Fadenzugkraft wird kontinuierlich gemessen und mit einem vorgegebenen Sollwert verglichen. Aufgrund der ermittelten Abweichung sorgt ein Regler dafür, dass am Fadenspanner stets der erforderliche Anpressdruck anliegt.

Die DE 195 00 517 A1 betrifft ein Verfahren zum Einmessen und Kalibrieren von Fadenspannungssensoren für Maschinen zur Herstellung und Verarbeitung von Chemiefasern. Fadenspannungssensor ist dabei eine andere Bezeichnung für Fadenzugkraftsensor. Es werden Eichwerte bzw. eine Eichkurve bestimmt, die in einer Auswerteeinheit abgespeichert werden. Eine Eichkurve oder Kalibrierkurve gibt die Beziehung zwischen dem vom Fadenzugkraftsensor bereitgestellten Wert, meist eine elektrische Spannung, und der tatsächlichen Fadenzugkraft an. Die Eichkurve ist meist annährend eine Gerade, so dass häufig ein konstanter Verstärkungsfaktor für die Umrechnung des bereitgestellten Wertes in die Fadenzugkraft verwendet werden kann. Es wird weiterhin die Problematik der Drift erörtert. Dabei handelt es sich um eine langsame Verschiebung des Messwertes. Das heißt, eine ermittelte Eichkurve verschiebt sich über die Betriebszeit. Beim Einmess- und Kalibiervorgang wird der Fadenzugkraftsensor zunächst im lastfreien Zustand betrieben, das heißt, ohne eingelegten Faden und der Ausgang der Messeinheit des Fadenzugkraftsensors auf Null gesetzt. Zur Kompensation der Drift kann dieser Vorgang in gewissen Abständen wiederholt werden.

Die DE 198 11 241 A1 offenbart eine Flachstrickmaschine mit einem Fadenliefergerät, einem Fadenspannungssensor und einer Kalibriereinrichtung. Letztere hebt den Faden zu Zeitpunkten von einem zu dem Fadenspannungssensor gehörigen Stift ab, bei denen dies ohne Beeinträchtigung des Betriebes des Fadenliefergerätes möglich ist. Ist der Faden von dem Stift abgehoben, wird ein Nullpunktabgleich durchgeführt, womit Nullpunktdriften des gesamten Sensorsystems erfasst und ausgeglichen werden können.

Um größere Messfehler zu vermeiden, ist es bei den meisten Fadenzugkraftsensoren und Anwendungsbereichen in der Regel erforderlich, in bestimmten Zeitabständen einen Nullpunktabgleich durchzuführen, das heißt, einen durch eine Drift hervorgerufenen Messfehler zu kompensieren. Ein solcher Nullpunktabgleich kann durchgeführt werden, wenn der Fadenzugkraftsensor nicht mit einem Faden beaufschlagt ist. Die von der Messeinrichtung angezeigte oder zur Verarbeitung weitergeleitete Fadenzugkraft kann dann zu Null gesetzt werden. Die Drift, die zwischen zwei Nullpunktabgleichen ohne Faden auftritt, wird nicht kompensiert.

Beim Spulen von Garn von einem Kops auf eine Kreuzspule wird das Garn während des Spulprozesses ausgereinigt. Das heißt, Fehler im Garn werden gemessen und herausgeschnitten. Die Fadenenden werden mittels einer Fadenverbindungseinrichtung wieder zusammengefügt. Bei diesem Ausreinigungsprozess ist der Fadenzugkraftsensor nicht mit einem Faden beaufschlagt und der Nullpunktabgleich kann durchgeführt werden. Falls erforderlich, können zusätzlich Schnitte durchgeführt werden, um den Fadenzugkraftsensor lastfrei zu machen und einen Nullpunktabgleich durchzuführen. Durch solche nicht zur Reinigung des Garns notwendigen Schnitte wird die Produktivität der Spulmaschine allerdings unnötig herabgesetzt.

Beim Umspulen eines Garns von einer Kreuzspule auf eine Kreuzspule werden kaum Reinigerschnitte durchgeführt, da eine Kreuzspule bereits ein ausgereinigtes Garn aufweist. Es sind deshalb Vorrichtungen, ähnlich wie bei der oben beschriebenen Strickmaschine, bekannt, die den Faden während des Umspulprozesses von dem Fadenzugkraftsensor abheben, damit ein Nullpunktabgleich durchgeführt werden kann. Eine solche Vorrichtung bedeutet aber einen zusätzlichen konstruktiven Aufwand.

Es ist daher die Aufgabe der vorliegenden Erfindung, die Drift eines Fadenzugkraftsensors zuverlässig auf einfache Weise, das heißt, ohne zusätzlichen konstruktiven Aufwand und mit möglichst geringen Auswirkungen auf die Produktivität der Textilmaschine zu kompensieren.

Zur Lösung der Aufgabe wird die zeitveränderliche Drift des Fadenzugkraftsensors in Abhängigkeit von einer ersten Variablen, die eine Betriebszeit des Fadenzugkraftsensors repräsentiert, ermittelt, der zeitveränderliche Verlauf der Drift des Fadenzugkraftsensors wird in Abhängigkeit von der ersten Variablen gespeichert und es wird während der Beaufschlagung des Fadenzugkraftsensors mit einem Faden mittels des gespeicherten Verlaufes ein Nullpunktabgleich durchgeführt.

Erfindungsgemäß wird also ein Verfahren zur Verfügung gestellt, das einen Nullpunktabgleich ermöglicht, ohne dass der Faden von dem Fadenzugkraftsensor entfernt werden muss. Es ist keine Vorrichtung zur Fadenabhebung erforderlich. Fadenunterbrechungen im Zusammenhang mit dem Nullpunktabgleich können weitestgehend vermieden werden. Der Nullpunktabgleich kann so häufig wie erforderlich oder sogar kontinuierlich durchgeführt werden, ohne den Messbetrieb des Fadenzugkraftsensors zu unterbrechen.

Als erste Variable kann natürlich die Betriebszeit des Fadenzugkraftsensors gewählt werden. Bei der Verwendung des Fadenzugkraftsensors an der Arbeitsstelle einer Spulmaschine kann zum Beispiel auch die gespulte Länge als erste Variable gewählt werden.

Zur Ermittlung der Drift in Abhängigkeit von der ersten Variablen wird die Drift ohne Beaufschlagung des Fadenzugkraftsensors mit einem Faden gemessen. Bei der Messung ohne Faden ist sichergestellt, dass nur die Drift gemessen wird. Im Prinzip kann eine Driftkurve vollständig ohne Faden aufgenommen werden. Die Drift hängt jedoch nicht nur von der Betriebszeit, sondern auch von den Betriebsbedingungen ab. Deshalb wird vorzugsweise der Fadenzugkraftsensor mit einem Faden beaufschlagt betrieben und zur Ermittlung der Drift in Abhängigkeit von der ersten Variable die Beaufschlagung mit dem Faden unterbrochen. Dabei wird der Fadenzugkraftsensor vorzugsweise mit einem Faden mit einer vorgegebenen Fadenzugkraft beaufschlagt betrieben. Damit kann einer Abhängigkeit der Drift von der Fadenzugkraft Rechnung getragen werden. Die vorgegebene Fadenzugkraft sollte sich dabei an der Fadenzugkraft orientieren, mit der der Fadenzugkraftsensor künftig betrieben wird.

Die Ermittlung des Driftverlaufes kann bereits vor Einbau des Fadenzugkraftsensors in die Textilmaschine unter Laborbedingungen erfolgen. So ist es möglich, dass der Betrieb der Textilmaschine vollständig unbeeinflusst von dem Nullpunktabgleich bleibt.

Um den Aufwand für die Erfassung des Driftverlaufes zu reduzieren, ist es möglich, die Drift eines ersten Fadenzugkraftsensors in Abhängigkeit von der ersten Variable zu ermitteln und den gespeicherten Verlauf für den Nullpunktabgleich eines zweiten baugleichen Fadenzugkraftsensors zu verwenden.

Es ist aber auch möglich, den Driftverlauf erst nach Einbau des Fadenzugkraftsensors an einer Arbeitsstelle einer Textilmaschine zu ermitteln. Das hat den Vorteil, dass der Driftveriauf besser an die konkreten Betriebsbedingungen des Fadenzugkraftsensors angepasst ist. Auch hier kann der Aufwand reduziert werden, indem die Drift eines ersten an einer Arbeitsstelle einer Textilmaschine angeordneten Fadenzugkraftsensors in Abhängigkeit von der ersten Variable ermittelt wird und der gespeicherte Verlauf für den Nullpunktabgleich eines an einer zweiten baugleichen Arbeitsstelle angeordneten Fadenzugkraftsensors verwendet wird. Für ein derartiges Verfahren ist es möglich, nur die erste Arbeitsstelle für die Driftermittlung mit zusätzlichen Einrichtungen, zum Beispiel einer Einrichtung zum Abheben des Fadens von dem Fadenzugkraftsensor, auszustatten. Der Aufwand dafür ist gering, da die Einrichtungen nicht an allen Arbeitsstellen vorhanden sein müssen.

Der ermittelte Verlauf der Drift kann als Tabelle gespeichert werden, die jeweils einem Wert der ersten Variablen einen Wert der Drift zuordnet.

Alternativ kann der Verlauf der Drift als Funktion gespeichert werden, die die Drift in Abhängigkeit von der ersten Variablen beschreibt. Als Funktion kommt hier vor allem eine Exponentialfunktion in Frage, die die in der Praxis vorkommenden Driftverläufe am besten beschreibt.

Es sind auch Mischformen zwischen Funktion und Tabelle möglich. So können Verläufe zwischen zwei in einer Tabelle ablegten Stützpunkten interpoliert oder der Verlauf jenseits der abgelegten Werte extrapoliert werden.

Es ist zu beachten, dass die Drift sich nicht über eine absolute Zeit verändert. Die Drift entwickelt sich über eine Betriebszeit. Ein Fadenzugkraftsensor, der eine bestimmte Zeit nicht in Betrieb war, kehrt in seinen Ursprungszustand zurück. Bei Wiederinbetriebnahme wiederholt sich der Driftverlauf entsprechend.

Deshalb wird vorzugsweise eine aktuelle Betriebszeit des Fadenzugkraftsensors mit dem gespeicherten Verlauf der Drift synchronisiert, wenn der Betrieb des Fadenzugkraftsensors unterbrochen war.

Um die Synchronisierung zu ermöglichen, wird vorzugsweise während des Betriebes des Fadenzugkraftsensors eine zweite Variable, die eine aktuelle Betriebszeit des Fadenzugkraftsensors repräsentiert, ermittelt und gespeichert. Die erste und die zweite Variable stellen im Prinzip die gleiche Zeit dar, können aber zeitlich gegeneinander verschoben sein. Deshalb werden die erste und die zweite Variable miteinander synchronisiert, um den Verlauf der Drift mit dem aktuellen Betrieb des Fadenzugkraftsensors abzugleichen. Anschaulich gesprochen wird so der Punkt des Driftverlaufes ermittelt, an dem sich der Fadenzugkraftsensor gerade befindet.

Beim Einschalten des Fadenzugkraftsensors kann die zweite Variable dem Wert der ersten Variablen gleichgesetzt werden, bei dem gemäß dem gespeicherten Verlauf der Drift keine Drift auftritt. Dies ist die einfachste Form der Synchronisierung, die aber zuverlässig ist, wenn der Fadenzugkraftsensor ausreichend lange außer Betrieb war. Die Synchronisierung wird genauer, wenn zur Synchronisierung die Drift ohne Beaufschlagung des Fadenzugkraftsensors mit einem Faden gemessen wird. Es können je nach weiterer Verarbeitung ein oder mehrere Messwerte aufgenommen werden.

Gemäß einer ersten Variante wird die zweite Variable dem Wert der ersten Variablen gleichgesetzt, bei dem gemäß dem gespeicherten Verlauf der Drift die Drift der gemessenen Drift entspricht.

Gemäß einer zweiten Variante wird die zweite Variable dem Wert der ersten Variablen gleichgesetzt, bei dem gemäß dem gespeicherten Verlauf der Drift die Änderung der Drift der Änderung der gemessenen Drift entspricht.

Auch wenn der Driftverlauf bereits abgespeichert wurde und der Driftverlauf mit dem aktuellen Betrieb des Fadenzugkraftsensors synchronisiert wurde, kann der Nullpunktabgleich beziehungsweise die Driftkompensation weiter optimiert werden.

Dazu wird bei einer Unterbrechung des Betriebes des Fadenzugkraftsensors ohne Beaufschlagung des Fadenzugkraftsensors mit einem Faden die Drift gemessen und die gemessene Drift mit der Drift gemäß dem gespeicherten Verlauf verglichen.

Bei einer Abweichung der gemessenen Drift von der Drift gemäß dem gespeicherten Verlauf wird die Betriebszeit des Fadenzugkraftsensors erneut mit dem gespeicherten Verlauf synchronisiert. Fehler oder Ungenauigkeiten bei früheren Synchronisierungen können so ausgeglichen werden.

Es ist auch möglich, bei einer Abweichung der gemessenen Drift von der Drift gemäß dem gespeicherten Verlauf, den gespeicherten Verlauf der Drift zu korrigieren.

Um sicher zu gehen, dass eine korrekte Veränderung der Driftkompensation vorgenommen wird, kann grundsätzlich erst eine neue Synchronisierung vorgenommen werden. Wenn nach einer vorgegebenen Anzahl von Synchronisierungen der gespeicherte Verlauf der Drift nach wie vor abweicht, wird dieser korrigiert.

Die Erfindung betrifft ferner eine Textilmaschine mit einem Fadenzugkraftsensor, vorzugsweise eine Spulmaschine mit einer Vielzahl von Arbeitsstellen. Erfindungsgemäß ist eine Speichereinheit vorhanden, in der ein zeitveränderlicher Verlauf der Drift des Fadenzugkraftsensors in Abhängigkeit von einer die Betriebszeit des Fadenzugkraftsensors repräsentierenden Variablen gespeichert ist und es ist eine Auswerteeinheit vorhanden, die während der Beaufschlagung des Fadenzugkraftsensors mit einem Faden mittels des gespeicherten Verlaufes einen Nullpunktabgleich durchführt.

Die Erfindung wird nachfolgend anhand eines in den Zeichnungen dargestellten Ausführungsbeispiels näher erläutert.

Es zeigen:
- Fig. 1: eine erfindungsgemäße Textilmaschine;
- Fig. 2: eine Arbeitsstelle einer erfindungsgemäßen Textilmaschine;
- Fig. 3: eine Eichkurve eines Fadenzugkraftsensors;
- Fig. 4: ein Driftverlauf eines Fadenzugkraftsensors;
- Fig. 5: ein Blockschaltbild zur Veranschaulichung eines erfindungsgemäßen Nullpunktabgleichs;
- Fig. 6: ein Flussdiagramm eines erfindungsgemäßen Nullpunktabgleichs;
- Fig. 7: ein Flussdiagramm einer Optimierung des Driftverlaufes.

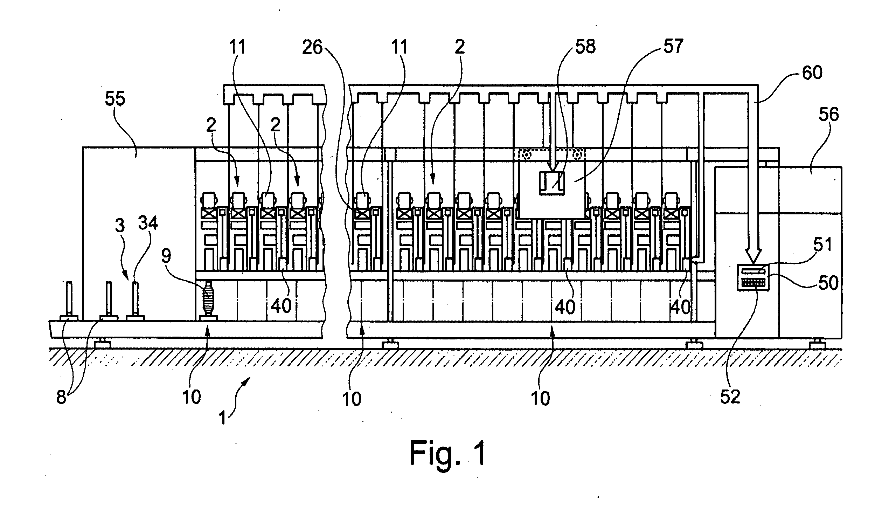

Die Fig. 1 zeigt eine Spulmaschine 1 mit einer Vielzahl von Arbeitsstellen 2, die zwischen den Endgestellen 55, 56 der Spulmaschine 1 angeordnet sind. Die Spulmaschine weist eine zentrale Steuereinheit 50 auf, die über ein Bussystem 60 mit den Arbeitsstellensteuerungen 40 verbunden ist. Die zentrale Steuereinheit weist zur Bedienung und Anzeige eine Tastatur 52 und ein Display 51 auf.

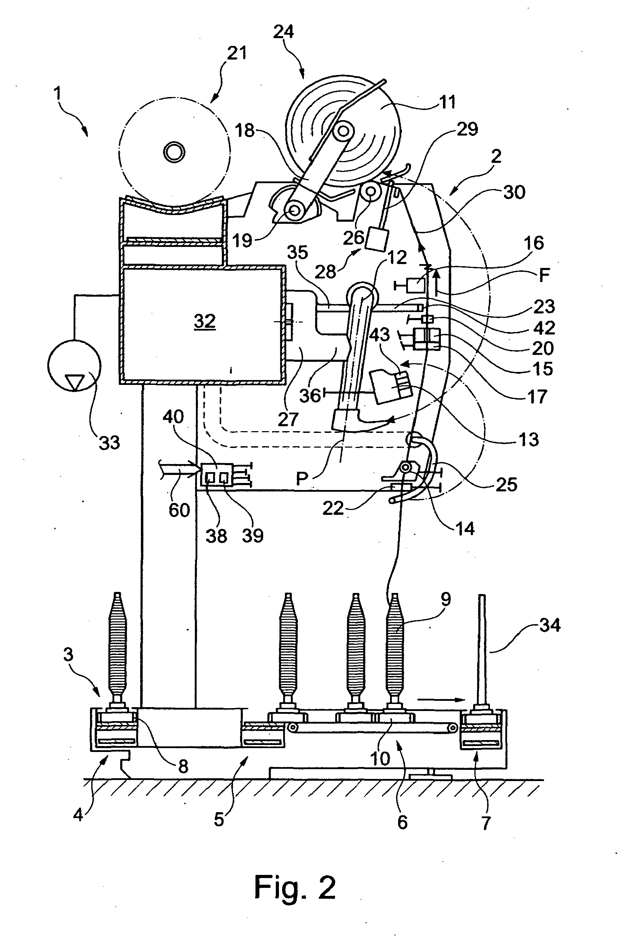

In Fig. 2 ist in Seitenansicht schematisch eine Arbeitsstelle 2 während des Spulprozesses dargestellt. Auf diesen Arbeitsstellen 2 werden, wie bekannt und daher nicht näher erläutert, Vorlagespulen, in der Regel auf Ringspinnmaschinen produzierte Spinnkopse 9, die nur relativ wenig Gammaterial aufweisen, zu großvolumigen Kreuzspulen 11 umgespult. Die fertigen Kreuzspulen 11 werden anschließend mittels eines selbsttätig arbeitenden Serviceaggregates 57, beispielsweise eines Kreuzspulenwechslers, auf eine maschinenlange Kreuzspulentransporteinrichtung 21 übergeben und zu einer maschinenendseitig angeordneten Spulenverladestation oder dergleichen transportiert.

Solche Spulmaschinen 1 sind außerdem entweder mit einem Rundmagazin ausgestattet, in dem Spinnkopse bevorratet werden können, oder die Kreuzspulautomaten weisen eine Logistikeinrichtung in Form eines Spulen- und Hülsentransportsystems 3 auf. In einem solchen Spulen- und Hülsentransportsystem 3 laufen dann Spinnkopse 9 beziehungsweise Leerhülsen 34 um, die in vertikaler Ausrichtung auf Transporttellern 8 angeordnet sind. Von diesem Hülsentransportsystem 3 sind lediglich die Kopszuführ strecke 4, die reversierend antreibbare Speicherstrecke 5, eine der zu den Arbeitsstellen 2 führenden Quertransportstrecken 6 sowie die Hülsenrückführstrecke 7 dargestellt. Wie angedeutet, werden die angelieferten Spinnkopse 9 dabei zunächst in einer Abspulstellung 10, die sich im Bereich der Quertransportstrecken 6 an den Arbeitsstellen 2 befindet, positioniert und anschließend umgespult.

Die einzelnen Arbeitsstellen 2 verfügen zu diesem Zweck, wie bekannt und daher nur angedeutet, über verschiedene Fadenüberwachungs- und -behandlungseinrichtungen, die nicht nur gewährleisten, dass die Spinnkopse 9 zu großvolumigen Kreuzspulen 11 umgespult werden können, sondern die auch sicherstellen, dass der Faden 30 während des Umspulvorganges auf Fadenfehler hin überwacht wird und detektierte Fadenfehler ausgereinigt werden. Jede Arbeitsstelle 2 verfügt über eine Arbeitsstellensteuerung 40, die über die nur angedeuteten Steuerleitungen mit den Fadenüberwachungs- und -behandlungseinrichtungen verbunden ist und über das Bussystem 60 mit der zentralen Steuereinheit 50 und der Steuereinrichtung 58 des Serviceaggregates 57 verbunden ist.

Die Arbeitsstellen 2 verfügen beispielsweise jeweils über eine Spulvorrichtung, die einen Spulenrahmen 18 aufweist, der um eine Schwenkachse 19 beweglich gelagert ist und mit einer Spulenantriebseinrichtung 26 sowie einer Fadenchangiereinrichtung 28 ausgestattet ist.

Bei dem dargestellten Ausführungsbeispiel liegt die Kreuzspule 11 während des Spulprozesses mit ihrer Oberfläche auf einer Antriebswalze 26 und wird von dieser über Reibschluss mitgenommen. Die Antriebswalze 26 wird dabei über eine drehzahlregelbare, reversierbare (nicht dargestellte) Antriebseinrichtung beaufschlagt.

Die Changierung des Fadens 30 beim Auflaufen auf die Kreuzspule 11 erfolgt mittels einer Fadenchangiereinrichtung 28, die im vorliegenden Ausführungsbeispiel einen Fingerfadenführer 29 aufweist.

Die Arbeitsstelle 2 verfügt des Weiteren über eine Fadenverbindungseinrichtung, vorzugsweise eine pneumatisch arbeitende Spleißeinrichtung 13 mit einer Schneideinrichtung 43, einen Unterfadensensor 22, einen Fadenspanner 14, einen Fadenreiniger 15 mit einer Fadenschneideinrichtung 17, einen Fadenzugkraftsensor 20 sowie eine Paraffiniereinrichtung 16.

Außerdem ist die Arbeitsstelle 2 mit einer Saugdüse 12 sowie mit einem Greiferrohr 25 ausgestattet, die beide definiert mit Unterdruck beaufschlagbar sind. Die Saugdüse 12 und das Greiferrohr 25 sind dabei an eine maschinenlange Unterdrucktraverse 32 angeschlossen, die ihrerseits mit einer Unterdruckquelle 33 in Verbindung steht.

Im dargestellten Ausführungsbeispiel ist außerdem im Bereich der Paraffiniereinrichtung 16 eine bezüglich des Fadenlaufweges etwas nach hinten versetzt angeordnete Fadenfangdüse 23 so positioniert, dass der Faden 30 während des Spulprozesses vor ihrer Mündung 42 läuft. Die Fadenfangdüse 23 ist über eine Luftweiche 27 ebenfalls an die Unterdrucktraverse 32 angeschlossen. Die Luftweiche 27 weist dabei einen Anschlussstutzen 35 für die Fadenfangdüse 23 sowie einen relativ voluminösen Entlastungsstutzen 36 auf, dessen Mündung während des regulären Spulbetriebes durch die in Wartestellung P positionierte Saugdüse 12 luftdicht verschlossen ist. Ein Öffnen des Entlastungsstutzens 36 durch Hochschwenken der Saugdüse 12 sorgt dafür, dass der an der Fadenfangdüse 23 anstehende Unterdruck zusammenbricht.

Im regulären fehlerfreien Spulbetrieb wird die Fadenspannung an jeder Arbeitsstelle geregelt. Im vorliegenden Ausführungsbeispiel wird ein Sollwert für die Fadenzugkraft vorgegeben. Dieser kann vom Bediener zum Beispiel an der zentralen Steuereinheit 50 für eine Partie vorgegeben werden und mittels des Bussystems 60 an die Arbeitsstellensteuerungen 40 der zu dieser Partie gehörenden Arbeitsstellen 2 übermittelt werden. Der Istwert der Fadenzugkraft wird mittels des Fadenzugkraftsensors 20 gemessen. Der Soll- und der Istwert der Fadenspannung werden miteinander verglichen. Ein Regler steuert in Abhängigkeit der Differenz den Fadenspanner 14 an, um den Istwert der Fadenspannung auf den Sollwert einzuregeln.

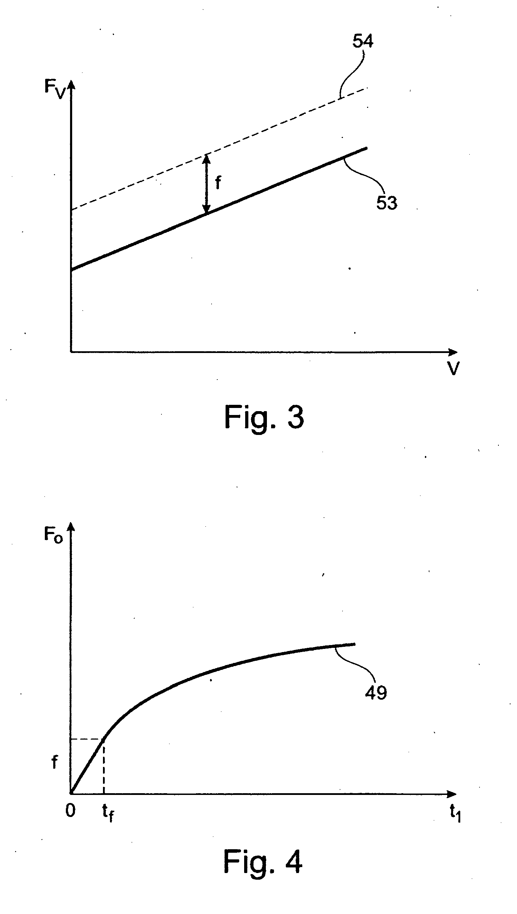

Der Fadenzugkraftsensor 20 wurde bereits im Vorfeld kalibriert beziehungsweise geeicht. Das heißt, es wurde der Zusammenhang ermittelt zwischen dem Wert V, der vom Messkopf des Fadenzugkraftsensors bereitgestellt wird, und dem Wert Fᵥ, der die konkrete Fadenzugkraft angibt. Der Wert V ist bei den heute üblichen elektronisch gesteuerten Fadenzugkraftsensoren 20 in der Regel eine elektrische Spannung. Der Zusammenhang zwischen dem Wert V und der Fadenzugkraft Fᵥ ist in der Regel zumindest annähernd linear. Der Zusammenhang wird durch die Kurve 53 in Fig. 3 veranschaulicht. Aber auch bei einem geeichten Fadenzugkraftsensor 20 verändern sich die angezeigten Fadenzugkraftwerte über die Betriebszeit t₁ des Fadenzugkraftsensors. Man spricht von einer Drift. Die Drift wird zum Beispiel von der Temperatur beeinflusst, insbesondere von der Erwärmung über die Betriebszeit. Je nach Messprinzip des Fadenzugkraftsensors 20 kann es weitere konzeptbezogene Gründe für das Driften des Messwertes geben. Ein prinzipieller Verlauf der Drift F₀ ist in Fig. 4 dargestellt. Die Kurve zeigt die angezeigte Fadenzugkraft in Abhängigkeit der Betriebszeit, wenn der Fadenzugkraftsensor nicht mit einem Faden 30 beaufschlagt ist. Aus der Kurve 49 lässt sich zum Betriebszeitpunkt t_{f} die Drift f ablesen. Wenn der Fadenzugkraftsensor 20 zum Betriebszeitpunkt t_{f} mit einem Faden 30 beaufschlagt wird, ist der angezeigte Wert der Fadenzugkraft Fᵥ um die Drift f zu groß. Der geeichte Fadenzugkraftsensor verhält sich also zum Betriebszeitpunt t_{f} so, als wäre die Eichkurve 53 um den Wert f verschoben und würde der gestrichelten Kurve 54 entsprechen. Zu beachten ist, dass sich die Verschiebung entsprechend dem Driftverlauf über die Betriebszeit t₁ ändert.

Die in den Figuren 1 und 2 dargestellte Spulmaschine 1 weist an jeder Arbeitsstelle 2 als Teil der Arbeitsstellensteuerung 40 eine Speichereinheit 39 und eine Auswerteeinheit 38 auf. In der Speichereinheit 39 sind der Driftverlauf 49 und die Eichkurve 53 gespeichert. Es ist alternativ möglich, die Kurven ganz oder teilweise in einem dem Fadenzugkraftsensor 20 zugeordneten Speicher oder zentral für alle Arbeitsstellen 2 zu speichern. Die Auswerteeinheit 38 ermittelt aus dem von dem Fadenzugkraftsensor übermittelten Signal einen driftkompensierten Fadenzugkraftwert. Auch hier können alternativ Teile der Auswertung auch zentral oder vom Fadenzugkraftsensor durchgeführt werden.

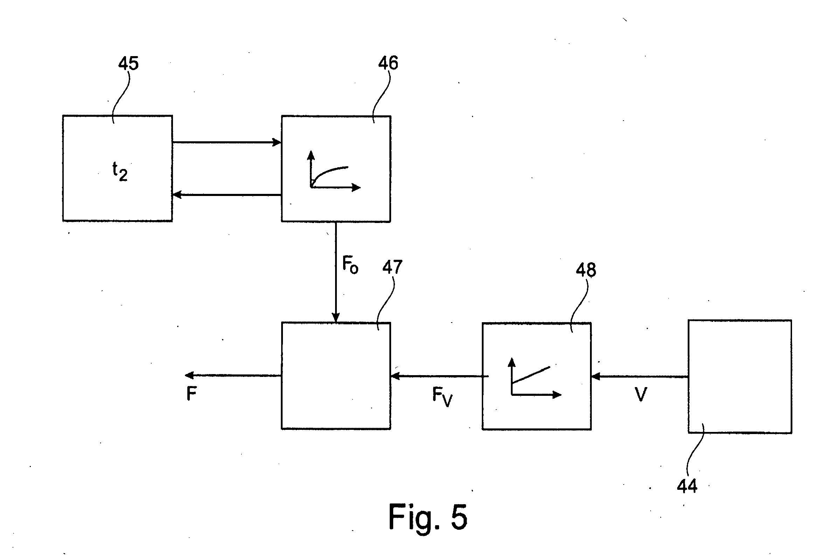

Die Fig. 5 veranschaulicht die Auswertung des Messwertes V des Messkopfes 44 des Fadenzugkraftsensors 20 bis hin zu dem driftkompensierten Fadenzugkraftsignal F. Der Block 48 ermittelt anhand der Eichkurve 53 einen Wert Fᵥ für die Fadenzugkraft. Der Block 47 führt für jeden neuen Wert Fᵥ den Nullpunktabgleich durch. Dies geschieht während des normalen Messbetriebes. Eine Fadenunterbrechung ist nicht erforderlich, da der Driftverlauf 49 bereits zuvor ermittelt und gespeichert worden ist. Der Block 46 ermittelt aus dem gespeicherten Driftverlauf 49 den passenden Driftwert F₀. Um den richtigen, driftkompensierten Fadenzugkraftwert F zu ermitteln, kann der Driftwert F₀ einfach von dem Wert Fᵥ subtrahiert werden. Um den jeweils aktuellen Wert F₀ aus dem Driftverlauf 49 zu ermitteln, wird die Betriebszeit t₂ der Arbeitsstelle 2 der Spulmaschine 1 erfasst. Die Betriebszeiterfassung wird durch den Block 45 symbolisiert. Zwischen den Blöcken 45 und 46 findet ein Datenaustausch in beide Richtungen statt. Nach längeren Spulunterbrechungen oder nach dem Einschalten der Spulmaschine wird zunächst eine Synchronisation der Betriebszeit t₂ der Arbeitsstelle mit der Betriebszeit t₁ des Driftverlaufes synchronisiert. Dann kann aus dem Driftverlauf anhand der Betriebszeit t₂ sofort der aktuelle Driftwert F₀ abgelesen werden.

Alternativ ist es möglich, anstelle der Betriebszeit t₂ die insgesamt gespulte Länge zu erfassen. Die gespulte Länge wird bei Spulmaschinen häufig ohnehin erfasst. Die gespulte Länge wird zum Beispiel als Maßstab für einen Kreuzspulen-/ Leerhülsenwechsel verwendet. Um ein der Betriebszeit entsprechendes Signal zu erhalten, muss die gespulte Länge lediglich aufaddiert werden.

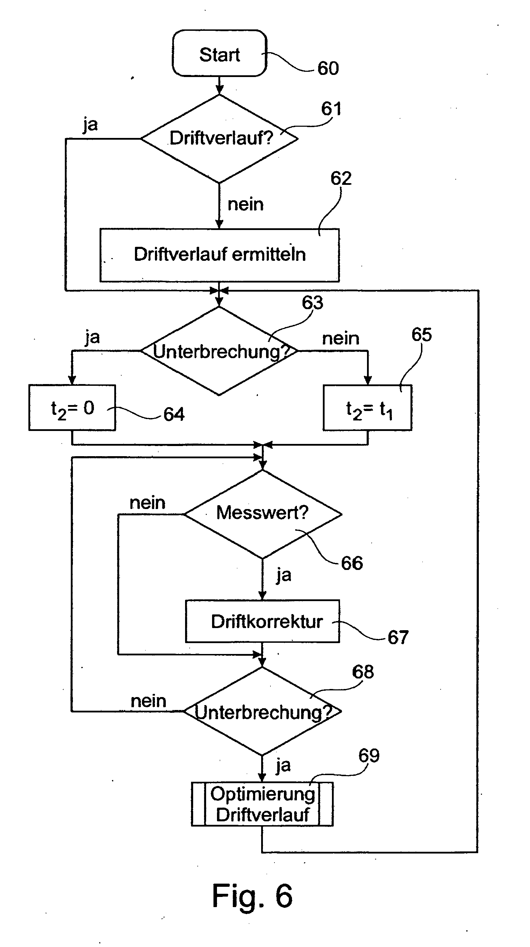

Die Fig. 6 zeigt ein Flussdiagramm mit einem möglichen Ablauf des Nullpunktabgleichs. Mit dem Kontrollpunkt 60 wird der Spulprozess gestartet. Mit der Verzweigung 61 wird zunächst überprüft, ob bereits ein Driftverlauf in der Speichereinheit 39 gespeichert ist. Der Driftverlauf 49 kann bereits für den Fadenzugkraftsensor oder für den Fadenzugkraftsensortyp erfasst werden. In dem Falle wird der Driftverlauf 49 bei der Inbetriebnahme der Spulmaschine 1 auf die Arbeitsstellensteuerung 40 übertragen und gespeichert. Der Driftverlauf 49 kann auch an einer Pilotarbeitsstelle der Spulmaschine 1 ermittelt und über das Bussystem 60 an die anderen Arbeitsstellen übertragen worden sein. Der Driftverlauf kann natürlich auch bei einem früheren Spulprozess der Arbeitsstelle ermittelt worden sein. Der Driftverlauf 49 kann dabei als Tabelle oder als Exponentialfunktion gespeichert sein.

Wenn an der Arbeitsstelle 2 kein Driftverlauf vorhanden ist, wird an der Arbeitsstelle 2 mit der Operation 62 eine Pilotmessung durchgeführt. Das heißt, während des Spulprozesses werden in vorgegebenen Zeitabständen Fadenunterbrechungen herbeigeführt. Während der Fadenunterbrechung kann die Drift gemessen und gespeichert werden. Die Fadenunterbrechung wird dabei durch einen Schnitt der Schneideinrichtung 43 ausgelöst. Der Ober- und der Unterfaden werden dann in bekannter Weise mittels der Saugdüse 12 und des Greiferrohres 25 der Spleißeinrichtung 13 vorgelegt, die eine Fadenverbindung herstellt.

Wenn ein Driftverlauf vorhanden ist, folgt Verzweigung 63. Es wird überprüft, ob der Spulprozess lange unterbrochen war oder nicht. Davon hängt ab, wie die Synchronisation der Betriebszeit t₂ der Arbeitsstelle mit der Betriebszeit t₁ des Driftverlaufes 49 erfolgt. Wenn der Spulprozess länger als eine vorgegebene Zeitspanne unterbrochen war, ist der Fadenzugkraftsensor wieder in seinem Ausgangszustand. In diesem Fall folgt Operation 64. Die Betriebszeit t₂ der Arbeitsstelle entspricht dann dem Startzeitpunkt des Driftverlaufes. Wenn der Spulprozess nur kurz unterbrochen war, muss der aktuelle Arbeitspunkt auf dem Driftverlauf bestimmt werden. Dies symbolisiert Operation 65. Es werden ein oder mehrere Vergleichsmessungen der Drift durchgeführt. Durch mathematische Vergleichsmethoden kann der Arbeitspunkt auf dem Driftverlauf ermittelt werden. Die Betriebszeit t₂ der Arbeitsstelle wird dann entsprechend festgelegt.

Nach Durchführung der Synchronisation überprüft Verzweigung 66, ob ein neuer Messwert vorhanden ist. Wenn ja, folgt mit Operation 67 die Driftkorrektur. Verzweigung 68 überprüft, ob der Spulprozess unterbrochen ist. Wenn der Spulprozess unterbrochen ist, wird das Unterprogramm 69 aufgerufen. Ansonsten erfolgen die Messwerterfassung und die Driftkorrektur weiter. Nach Ausführung des Unterprogramms wird die Synchronisation erneut überprüft und der bereits beschriebene Verlauf wiederholt sich.

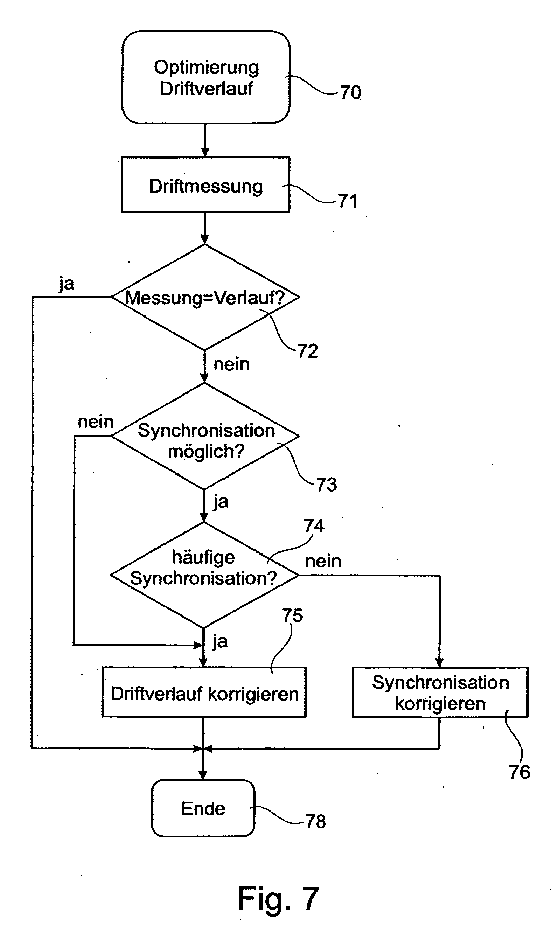

Das Unterprogramm 69 führt eine Optimierung des Driftverlaufes aus und ist in Fig. 7 genauer dargestellt. Die Überprüfung und Optimierung des Driftverlaufes startet mit dem Kontrollpunkt 70. Operation 71 führt eine Ermittlung der Drift des Messsignals aus. Die Verzweigung 72 überprüft, ob die ermittelte Drift mit dem gespeicherten Driftverlauf 49 übereinstimmt. Wenn dies der Fall ist, springt das Programm zum Kontrollpunkt 78 und das Programm ist beendet. Ansonsten wird durch Verzweigung 73 überprüft, ob eine Korrektur der Synchronisation von Driftverlauf und Messung möglich ist. Wenn nein, führt Operation 75 eine Korrektur des Driftverlaufes aus. Wenn ja, überprüft Verzweigung 74 zunächst, ob die Synchronisation oft durchgeführt wurde, bevor die Synchronisation mit Operation 76 korrigiert wird. Wenn die Synchronisation bereits häufig durchgeführt wurde, wird Operation 75 aufgerufen und der Driftverlauf korrigiert. Mit Kontrollpunkt 78 ist das Programm dann beendet.

## Patentansprüche

1. Verfahren zum Nullpunktabgleich eines Fadenzugkraftsensors (20),
**dadurch gekennzeichnet,**
**dass** die zeitveränderliche Drift (F₀) des Fadenzugkraftsensors (20) in Abhängigkeit von einer ersten Variablen (t₁), die eine Betriebszeit des Fadenzugkraftsensors (20) repräsentiert, ermittelt wird,
**dass** der zeitveränderliche Verlauf (49) der Drift des Fadenzugkraftsensors (20) in Abhängigkeit von der ersten Variablen (t₁) gespeichert wird und
**dass** während der Beaufschlagung des Fadenzugkraftsensors (20) mit einem Faden (30) mittels des gespeicherten Verlaufes ein Nullpunktabgleich durchgeführt wird.

2. Verfahren nach Anspruch 1, **dadurch gekennzeichnet, dass** zur Ermittlung der Drift (F₀) in Abhängigkeit von der ersten Variablen (t₁) die Drift (F₀) ohne Beaufschlagung des Fadenzugkraftsensors (20) mit einem Faden (30) gemessen wird.

3. Verfahren nach Anspruch 1 oder 2, **dadurch gekennzeichnet, dass** der Fadenzugkraftsensor (20) mit einem Faden (30) beaufschlagt betrieben wird und zur Ermittlung der Drift (F₀) in Abhängigkeit von der ersten Variablen (t₁) die Beaufschlagung mit dem Faden (30) unterbrochen wird.

4. Verfahren nach Anspruch 3, **dadurch gekennzeichnet, dass** der Fadenzugkraftsensor (20) mit einem Faden (30) mit einer vorgegebenen Fadenzugkraft beaufschlagt betrieben wird.

5. Verfahren nach einem der vorherigen Ansprüche, **dadurch gekennzeichnet, dass** die Drift (F₀) eines ersten Fadenzugkraftsensors in Abhängigkeit von der ersten Variablen (t₁) ermittelt wird und der gespeicherte Verlauf für den Nullpunktabgleich eines zweiten baugleichen Fadenzugkraftsensors verwendet wird.

6. Verfahren nach einem der vorherigen Ansprüche, **dadurch gekennzeichnet, dass** die Drift (F₀) eines ersten an einer Arbeitsstelle (2) einer Textilmaschine (1) angeordneten Fadenzugkraftsensors (20) in Abhängigkeit von der ersten Variablen (t₁) ermittelt wird und der gespeicherte Verlauf für den Nullpunktabgleich eines an einer zweiten baugleichen Arbeitsstelle angeordneten Fadenzugkraftsensors verwendet wird.

7. Verfahren nach einem der vorherigen Ansprüche, **dadurch gekennzeichnet, dass** der Verlauf (49) der Drift (F₀) als Tabelle gespeichert wird, die jeweils einem Wert der ersten Variablen (t₁) einen Wert der Drift (F₀) zuordnet.

8. Verfahren nach einem der Ansprüche 1 bis 7, **dadurch gekennzeichnet, dass** der Verlauf (49) der Drift (F₀) als Funktion gespeichert wird, die die Drift (F₀) in Abhängigkeit von der ersten Variablen (t₁) beschreibt.

9. Verfahren nach einem der vorherigen Ansprüche, **dadurch gekennzeichnet, dass** eine aktuelle Betriebszeit des Fadenzugkraftsensors mit dem gespeicherten Verlauf (49) der Drift (F₀) synchronisiert wird.

10. Verfahren nach Anspruch 9, **dadurch gekennzeichnet, dass** während des Betriebes des Fadenzugkraftsensors eine zweite Variable (t₂), die eine aktuelle Betriebszeit des Fadenzugkraftsensors (20) repräsentiert, ermittelt und gespeichert wird.

11. Verfahren nach Anspruch 10, **dadurch gekennzeichnet, dass** die erste Variable (t₁) und die zweite Variable (t₂) miteinander synchronisiert werden.

12. Verfahren nach Anspruch 11, **dadurch gekennzeichnet, dass** beim Einschalten des Fadenzugkraftsensors (20) die zweite Variable (t₂) dem Wert der ersten Variablen (t₁) gleichgesetzt wird, bei dem gemäß dem gespeicherten Verlauf (49) der Drift (F₀) keine Drift auftritt.

13. Verfahren nach Anspruch 11, **dadurch gekennzeichnet, dass** zur Synchronisierung die Drift (F₀) ohne Beaufschlagung des Fadenzugkraftsensors mit einem Faden (30) gemessen wird.

14. Verfahren nach Anspruch 13, **dadurch gekennzeichnet, dass** die zweite Variable (t₂) dem Wert der ersten Variablen (t₁) gleichgesetzt wird, bei dem gemäß dem gespeicherten Verlauf (49) der Drift (F₀) die Drift der gemessenen Drift entspricht.

15. Verfahren nach Anspruch 13, **dadurch gekennzeichnet, dass** die zweite Variable (t₂) dem Wert der ersten Variablen (t₁) gleichgesetzt wird, bei dem gemäß dem gespeicherten Verlauf (49) der Drift (F₀) die Änderung der Drift der Änderung der gemessenen Drift entspricht.

16. Verfahren nach einem der vorherigen Ansprüche, **dadurch gekennzeichnet, dass** bei einer Unterbrechung des Betriebes des Fadenzugkraftsensors (20) ohne Beaufschlagung des Fadenzugkraftsensors (20) mit einem Faden (30) die Drift (F₀) gemessen wird und die gemessene Drift mit der Drift gemäß dem gespeicherten Verlauf (49) verglichen wird.

17. Verfahren nach Anspruch 16, **dadurch gekennzeichnet, dass** bei einer Abweichung der gemessenen Drift von der Drift gemäß dem gespeicherten Verlauf (49) die Betriebszeit des Fadenzugkraftsensors (20) erneut mit dem gespeicherten Verlauf (49) synchronisiert wird.

18. Verfahren nach Anspruch 16, **dadurch gekennzeichnet, dass** bei einer Abweichung der gemessenen Drift von der Drift gemäß dem gespeicherten Verlauf (49), der gespeicherte Verlauf (49) der Drift (F₀) korrigiert wird.

19. Verfahren nach Anspruch 17, **dadurch gekennzeichnet, dass** nach einer vorgegebenen Anzahl von Synchronisierungen der gespeicherte Verlauf (49) der Drift (F₀) korrigiert wird.

20. Textilmaschine (1) mit einem Fadenzugkraftsensor (20),
**dadurch gekennzeichnet,**
**dass** eine Speichereinheit (39) vorhanden ist, in der ein zeitveränderlicher Verlauf (49) der Drift (F₀) des Fadenzugkraftsensors (20) in Abhängigkeit von einer eine Betriebszeit des Fadenzugkraftsensors repräsentierenden Variablen (t₁) gespeichert ist und
**dass** eine Auswerteeinheit (38) vorhanden ist, die während der Beaufschlagung des Fadenzugkraftsensors (20) mit einem Faden (30) mittels des gespeicherten Verlaufes (49) einen Nullpunktabgleich durchführt.
